# FASCICULE DE BREVET EUROPEEN

(11) **EP 1 646 590 B1**
(45) Date de publication et mention de la délivrance du brevet: **06.01.2016**
(21) Numéro de dépôt: 04767670.5
(22) Date de dépôt: 13.07.2004
(51) Int. Cl.: C03B 37/04, B32B 17/02, B32B 15/04, D04H 1/74, B29C 67/24, E04B 1/80, C03C 3/078, C03C 3/087, C03C 3/091

(54) **STRUCTURE SANDWICH A BASE DE FIBRES MINERALES ET SON PROCEDE DE FABRICATION**
AUF MINERALFASER BASIERENDE SANDWICHSTRUKTUR UND HERSTELLUNGSVERFAHREN DAFÜR
MINERAL FIBRE-BASED SANDWICH STRUCTURE AND METHOD FOR THE PRODUCTION THEREOF

(30) Priorité: 23.07.2003 FR 0308976
(43) Date de publication de la demande: 19.04.2006
(73) Titulaire: SAINT-GOBAIN ISOVER, 92400 Courbevoie (FR)
(72) Inventeur: DUPOUY, Valérie, F-60520 La Chapelle en Serval (FR); MARICOURT, Jean Pierre, 84000 AVIGNON (FR)
(74) Mandataire: Aupetit, Muriel J. C.
(86) Numéro de dépôt international: PCT/FR2004/001840
(87) Numéro de publication internationale: WO 2005/019124

(56) Documents cités:
- EP-A- 0 407 264
- EP-A- 0 434 536
- EP-A- 0 449 414
- EP-A- 0 493 159
- WO-A-01/38245
- WO-A-96/26310
- FR-A- 2 745 597

## Description

L'invention concerne une structure sandwich comportant une âme et deux éléments de parement entre lesquels est disposée l'âme, l'âme étant formée à partir d'un produit à base de fibres minérales obtenu par un procédé de centrifugation interne associée à un étirage par un courant gazeux à haute température.

Ces structures sandwich, se présentant sous forme de panneaux, servent à l'isolation thermique et/ou acoustique tout en présentant des propriétés mécaniques particulièrement élevées, pour des applications spécifiques nécessitant de telles propriétés. Il s'agit notamment de structures sandwich qui sont adaptées à constituer des éléments de construction et qui doivent par conséquent résister à des fortes compressions tels que les éléments servant à l'isolation des toitures-terrasses accessibles à la circulation. C'est aussi le cas de structures utilisées en isolation pour l'extérieur et qui doivent pouvoir notamment résister aux efforts à l'arrachement et aux efforts de cisaillement créés notamment sous l'action du vent par pression.

Pour atteindre ces performances, ce type de structure d'isolation présente une âme qui est généralement de forte densité, par exemple d'au moins 80 kg/m³.

De telles structures sont par exemple connues et commercialisées par la société RANNILA, les fibres minérales constituant l'âme de ce produit étant des fibres de verre obtenues par un procédé de centrifugation interne et commercialisées par la société ISOVER OY.

On connaît également les structures de la société PAROC OY commercialisées sous la dénomination PAROC, dont l'âme est par contre en laine de roche, les fibres étant donc obtenues par centrifugation externe. Aussi, bien que performants sur le plan de la résistance à la compression et au cisaillement, ces structures sont des produits encore plus lourds, de l'ordre de 85 à 120 kg/m³ en densité, la qualité des performances étant d'autant plus élevée que le produit est lourd.

Or, il est toujours souhaitable d'améliorer les performances de telles structures tout en n'augmentant pas leur poids.

C'est justement le but de l'invention, de fournir des structures sandwich en fibres minérales dont les performances souhaitées quant à leur résistance mécanique (résistances à la compression et au cisaillement) est atteinte, sans les alourdir et même en parvenant à des densités inférieures à celles existantes sur le marché. Parallèlement, les densités inférieures de ces structures par rapport à celles de l'art antérieur permettent d'obtenir des performances thermiques améliorées.

Selon l'invention, la structure sandwich comportant une âme et deux éléments de parement entre lesquels est disposée l'âme, l'âme étant formée à partir d'un produit à base de fibres minérales obtenu par un procédé de centrifugation interne associée à un étirage par un courant gazeux à haute température, est caractérisée en ce que les fibres minérales sont crêpées.

Le "crêpage" des fibres est une opération réalisée après l'opération de fibrage à proprement dite, cette opération visant à ce que les fibres à l'intérieur du produit prennent des directions aussi variées que possible sans trop modifier de façon sensible l'orientation générale de la nappe de fibres issue de la centrifugation. Cette opération consiste notamment en un passage de la nappe de fibres entre deux séries de convoyeurs délimitant ses faces inférieure et supérieure, et en une compression longitudinale résultant du passage d'une paire de convoyeurs animés d'une certaine vitesse V1 à une paire de convoyeurs de vitesse V2 inférieure à la précédente.

Bien qu'une telle opération soit connue pour fabriquer des feutres ou matelas à base de fibres minérales obtenues par centrifugation interne, ces feutres n'avaient jamais été utilisés pour fabriquer des structures sandwich. Or, il s'est avéré surprenant que le crêpage des fibres pour de telles structures améliorent grandement leur résistance, en particulier le résistance à la compression.

a distribution des fibres suivant une section sensiblement parallèle à la surface des éléments de parement est agencée selon un profil sensiblement en V.

Selon une autre caractéristique, l'âme comprend une pluralité de lamelles accolées qui s'étendent selon l'extension principale des éléments de parement, les lamelles étant constituées à partir du produit à base de fibres minérales crêpées.

Les lamelles ont été obtenues après avoir découpé le produit de base et l'avoir tourné de 90° par rapport au plan de repos du produit avant découpe. Aussi, lorsque la distribution des fibres présente un profil en V, à la manière de chevrons, le V s'étend sur toute la largeur des lamelles et les pointes des V sont sensiblement alignées. La distribution des fibres de profil en V est agencée selon des strates empilées sur toute la hauteur d'une lamelle, et par conséquent sur toute l'épaisseur de l'âme de la structure sandwich.

L'association d'un pluralité de lamelles du produit de base, le produit de base crêpé ayant été découpé et tourné de 90° pour fournir chaque lamelle avec une distribution de fibres telle que décrite ci-dessus, a permis ainsi d'obtenir une âme qui pris en sandwich entre deux parements assure des performances inattendues quant à la résistance à la compression et au cisaillement.

Avantageusement, la densité de la structure sandwich de l'invention est au plus égale à 80 kg/m³, de préférence comprise entre 60 et 70 kg/m³, et en particulier égale à 50 kg/m³. Pour ce type de produit de faible densité (inférieure ou égale à 80 kg/m³), les performances thermiques sont encore améliorées par rapport aux produits de densité plus importante.

Selon une autre caractéristique, la structure présente une résistance à la compression au moins égale à 80kPa, en particulier au moins égale à 60 kPa, et une résistance au cisaillement au moins égale à 80kP, en particulier au moins égale à 60 kPa.

Les fibres minérales de cette structure sont par exemple obtenues à partir de la composition verrière suivante en proportions pondérales:

| | |
|---|---|
| SIO₂ | 57 à 70% |
| Al₂O₃ | 0 à 5% |
| CaO | 5 à 10% |
| MgO | 0 à 5% |
| Na₂O + K₂O | 13 à 18% |
| B₂O₃ | 2 à 12% |
| F | 0 à 1,5% |
| P₂O₅ | 0 à 4% |
| Impuretés | <2% |

et renferme plus de 0,1% en poids de pentoxyde de phosphore lorsque le pourcentage pondéral d'alumine est égal ou supérieur à 1 %.

Une autre composition verrière peut également être la suivante en mol% :

| | |
|---|---|
| SIO₂ | 55-70 |
| B₂O₃ | 0-5 |
| Al₂O₃ | 0-3 |
| TiO₂ | 0-6 |
| Oxydes de fer | 0-2 |
| MgO | 0-5 |
| CaO | 8-24 |
| Na₂O | 10-20 |
| K₂O | 0-5 |
| Fluorure | 0-2 |

Une autre variante préférentielle de composition verrière est aussi la suivante en proportions pondérales, la teneur en alumine étant de préférence supérieure ou égale à 16% en poids,

| | |
|---|---|
| SiO₂ | 35-60 % |
| Al₂O₃ | 12-27 % |
| CaO | 0-35 % |
| MgO | 0-30 %, |
| Na₂O | 0-17 % |
| K₂O | 0-17 % |
| R₂O (Na₂O + K₂O) | 10-17 %, |
| P₂O₅ | 0-5 % |
| Fe₂O₃ | 0-20 % |
| B₂O₃ | 0-8 % |
| TiO₂ | 0-3% |

Selon encore une autre caractéristique, les éléments de parement de la structure sandwich sont en tôle, éventuellement perforée. Leur épaisseur est inférieure au mm, de préférence de l'ordre de 0,4 à 0,8 mm.

Avantageusement, la structure sandwich est utilisée en tant que panneau d'isolation thermique et/ou acoustique, de type panneau de toit, cloison ou parement de façade.

En outre, le procédé de fabrication d'une telle structure est caractérisé en ce qu'il consiste à :
- délivrer sur un plan (P) un produit à base de fibres minérales obtenues par un procédé de centrifugation interne;
- crêper le produit;
- découper le produit crêpé en lamelles, de préférence selon la plus grande extension du produit crêpé;
- tourner les lamelles de 90° par rapport au plan (P);
- accoler les lamelles et les assembler entre les deux éléments de parement.

Selon une caractéristique du procédé, les fibres du produit sont crêpées au moyen d'une installation de crêpage comportant au moins une première paire et une seconde paire de convoyeurs entre lesquels défile le produit pour être comprimé longitudinalement et selon son épaisseur, et qui présentent respectivement des vitesses V1 et V2, le rapport des vitesses R=V1/V2 étant supérieur ou égal à 3, et de préférence égal à 3,5, ainsi que des moyens de compression réduisant le produit à son épaisseur finale e, le rapport H/e, H correspondant à la hauteur entre les convoyeurs de la seconde paire, étant supérieur ou égal à 1,2, et de préférence égale à 1,6.

Enfin, l'invention a trait à une méthode de construction à partir d'au moins un élément isolant d'architecture, de type panneau de toit, cloison, parement de façade, caractérisée en ce que l'élément isolant d'architecture est formé par l'assemblage de structures sandwich selon l'invention. Les structures sandwich sont aboutées et associées entre elles par encastrement de leur extrémités qui présentent des formes de coopération mutuelle.

D'autres avantages et caractéristiques de l'invention vont à présent être décrits plus en détail en regard des dessins annexés sur lesquels :
- La figure 1 est une vue partielle de profil d'une structure sandwich selon l'invention;
- La figure 2 est une vue partielle de dessus et en coupe selon la ligne A-A de la figure 1;
- La figure 3 est une vue de profil, partielle et éclatée de la figure 1;
- La figure 4 illustre schématiquement une installation de fabrication d'une structure sandwich selon l'invention;
- La figure 5 est une photographie d'un échantillon d'un produit à base de fibres minérales crêpées de manière standard, destiné à une structure sandwich selon l'invention;
- La figure 6 est une photographie d'un échantillon d'un produit selon un crêpage particulier, destiné à une structure sandwich selon l'invention;

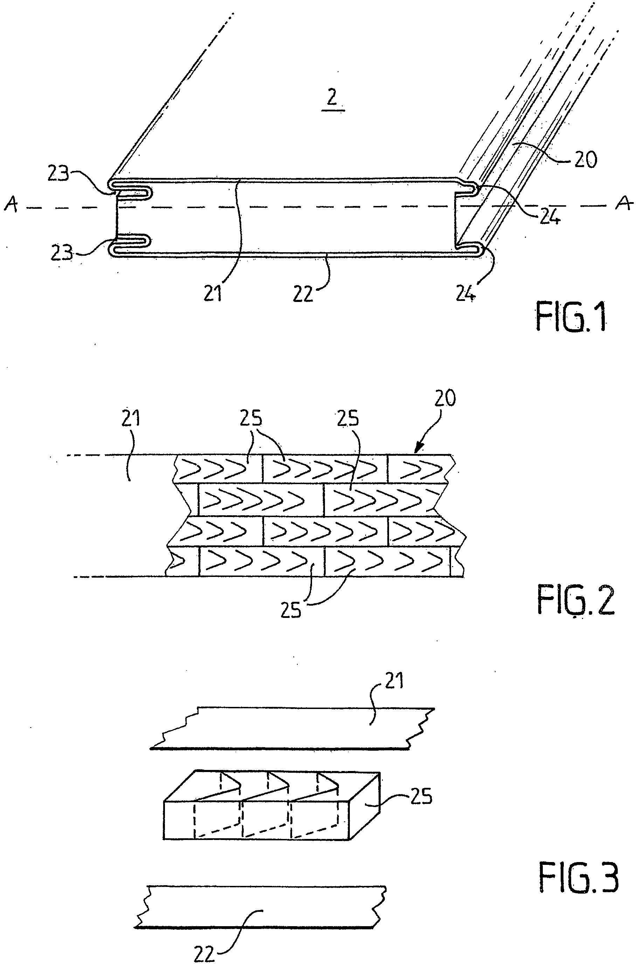

La figure 1 illustre une structure sandwich 2 d'isolation thermique et/ou acoustique destinée à être utilisée pour la construction de parois pour murs d'extérieur, de façades, de cloisons ou encore de plafonds de bâtiments.

La structure sandwich 2 comporte une âme 20 et deux éléments de parement 21 et 22 rendus solidaires de l'âme, par exemple par collage.

Les éléments de parement 21 et 22 sont en général en tôle et peuvent éventuellement être perforés lorsqu'il s'agit en particulier d'assurer une isolation acoustique. Ils présentent des extrémités profilées 23, 24 adaptées pour réaliser par coopération mutuelle l'assemblage d'une structure avec d'autres structures sandwich et permettre leur fixation sur l'ossature du bâtiment ou sur des lisses métalliques associées à l'ossature du bâtiment. Ainsi, l'extrémité 23 comporte une partie femelle, telle qu'une gorge, tandis que l'autre extrémité comporte une partie mâle 24, destinée à s'engager dans la partie femelle d'une structure adjacente.

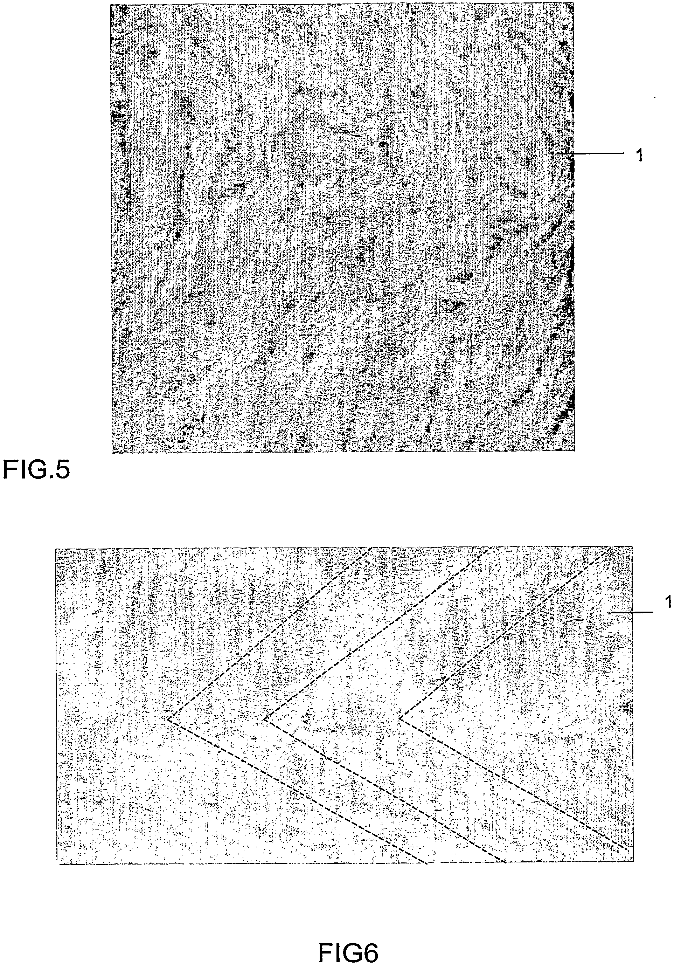

L'âme 20 visible à la figure 2 comporte une pluralité de lamelles 25 réalisées à partir d'un produit 1 à base de fibres minérales crêpées (figures 5 et 6).

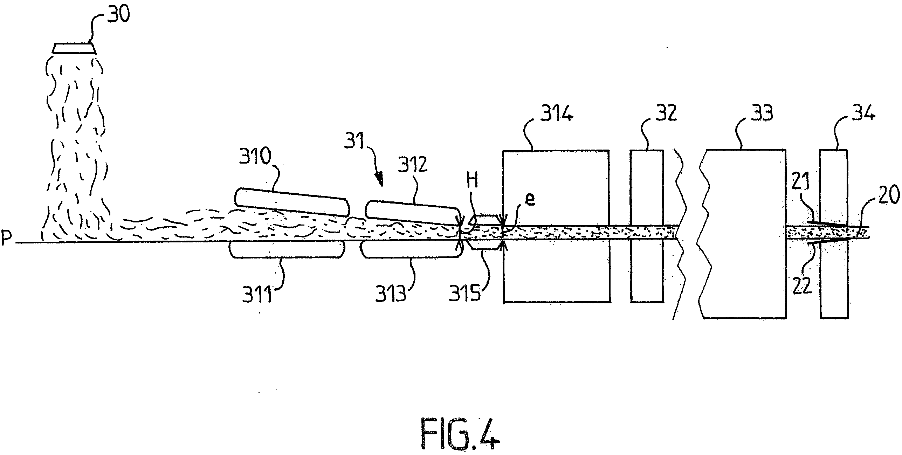

La fabrication d'une structure sandwich de l'invention est la suivante, la figure 4 illustrant schématiquement cette fabrication sur une ligne de fabrication qui n'est pas continue.

Le produit 1 est délivré en sortie d'un dispositif de centrifugation 30 selon un plan P et sous forme de matelas, puis est crêpé à l'aide d'une installation de crêpage 31 - les étapes de délivrance et de crêpage seront détaillées plus loin.

En sortie de l'installation de crêpage, le produit 1 crêpé est découpé en panneaux par un dispositif de découpe 32, du type massicot. Après découpe et sur une autre ligne de fabrication, à l'aide de moyens appropriés 33, les panneaux sont découpés à l'aide de scies circulaires par exemple, préférentiellement selon le sens longitudinal, en lamelles 25 à une grandeur donnée, ces lamelles étant ensuite tournées de 90° par rapport au plan P et associées les unes aux autres par compression. Les lamelles peuvent être agencées de différentes façons, en étant par exemple comprimées par rangées les unes contre les autres selon une même longueur, ou par exemple, en étant aboutées selon des longueurs différentes pour former une rangée et comprimées les unes contre les autres en étant décalées tel qu'illustré sur la figure 2.

Une fois les lamelles associées pour former l'âme 20, on procède à l'association de l'âme et des deux éléments de parements à l'aide d'un dispositif d'assemblage 34. Si l'âme est rendue solidaire des deux éléments de parements 21 et 22 par collage, ses surfaces opposées et en regard des éléments de parement sont enduites de colle avant l'insertion de l'âme entre les deux éléments de parement, l'ensemble subissant ensuite une compression et une polymérisation.

Les fibres minérales du produit 1 sont par exemple des fibres de verre. Les compositions verrières utilisées pour le produit 1 peuvent être diverses. On peut se référer pour des exemples de compositions à celles décrites dans le brevet EP 0 399 320 - B2 et la demande de brevet EP 0 412 878, ou encore dans les demandes WO 00/17117 et WO 01/68546 qui décrivent notamment une teneur en alumine supérieure ou égale à 12% en poids, et de préférence supérieure ou égale à 16% en poids. Ces dernières compositions à haute teneur en alumine assurent avantageusement un meilleur vieillissement du produit 1 et donc de la structure sandwich.

Le produit 1 de l'âme est obtenu comme dit plus haut par centrifugation interne et étirage par un courant gazeux à haute température de verre fondu, et par crêpage du matelas fibreux obtenu après la centrifugation.

De manière connue, le procédé de formation de fibres par centrifugation interne et étirage consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz sur lequel les fibres s'enchevêtrent sous la forme d'un matelas selon un plan P.

Puis les fibres sont ensuite acheminées vers l'installation de crêpage 31. Le matelas de fibres subit une opération de compression qui est obtenue en le faisant passer entre plusieurs paires de convoyeurs, par exemple deux paires 310, 311 et respectivement 312, 313, la distance séparant deux convoyeurs situés de part et d'autre du matelas allant en diminuant dans le sens de progression dudit matelas.

La vitesse de chaque paire de convoyeur est inférieure à celle des paires de convoyeurs précédents, ce qui occasionne une compression longitudinale du matelas. Ainsi, les paires de convoyeurs 310, 311; 312, 313 présentent respectivement une vitesse V1 et une vitesse V2, avec un rapport R=V1/V2 des vitesses qu'on adapte selon le crêpage final désiré.

Si de manière standard, le rapport R des vitesses est de l'ordre de 3, il pourra être préféré d'augmenter ce rapport de sorte qu'il soit de l'ordre de 3,5.

Puis, le produit crêpé est introduit dans une étuve 314 pour assurer son traitement thermique. Il y est maintenu dès son entrée par des moyens de compression 315 à son épaisseur finale e.

La hauteur H entre les deux derniers convoyeurs 312, 313 est fonction de l'épaisseur finale e que doit avoir le produit en sortie d'étuve. Si de manière standard, le rapport H/e est égal à 1,2, il peut de préférence être augmenté et être supérieur à 1,5, de préférence égale à 1,6.

Les caractéristiques de crêpage dites standard, c'est-à-dire avec R=3 et H/e=1,2, conduisent à un produit crêpé 1 dont les fibres sont orientées de manière aléatoire et multidirectionnelle et forment une diversité de boucles selon l'épaisseur du produit (figure 5).

Les caractéristiques de crêpage énoncées ci-dessus de manière préférentielle, c'est-à-dire avec R=3,5 et H/e=1,6, permettent d'obtenir un produit 1 dont les fibres sont orientées de manière particulière, telle qu'illustrée sur la figure 6, plus précisément selon une distribution de profil sensiblement en V à la manière de chevrons (traits en pointillés ajoutés sur la figure), le V s'étendant sur toute l'épaisseur du produit crêpé et les pointes des V étant disposées sensiblement selon une ligne parallèle à la direction de défilement du matelas.

Il s'est avéré de manière surprenante, comme nous le verrons dans la suite de la description, qu'avec ce crêpage particulier, les performances des structures sandwich quant à la résistance à la compression et la résistance au cisaillement sont encore meilleures qu'avec un crêpage standard, bien que ce dernier procure des résultats satisfaisants pour les structures sandwich réalisées pour l'invention, par rapport à l'utilisation actuelle dans le commerce de produits non crêpés à base de laine minérale obtenue par centrifugation interne, destinés à des structures sandwich.

Une fois le produit crêpé 1 intégré à une structure sandwich, le profil en V de la distribution des fibres est alors sensiblement parallèle à la surface des éléments de parement 21, 22 (figure 2), un V s'étendant sur toute la largeur d'une lamelle et les pointes des V étant sensiblement alignées. Ce profil en V n'est visible que selon une vue de dessus et en coupe de l'âme suivant un plan parallèle aux parements.

La distribution des fibres de profil en V est agencée selon des strates empilées sur toute la hauteur d'une lamelle (figure 3), et par conséquent sur toute l'épaisseur de l'âme de la structure sandwich.

Ainsi, l'étape de crêpage faisant suite à l'obtention de fibres sous centrifugation interne permet de fabriquer des structures ou panneaux sandwich de masse volumique notamment égale à 65 kg/m³, inférieure à celle de panneaux existants, donc plus légers que des panneaux par exemple de la société PAROC OY de référence PAROC 75C ou 50C fabriqués à partir de produits à base de fibres minérales obtenues par centrifugation externe, tout en obtenant des caractéristiques de résistances à la compression et au cisaillement tout aussi performantes, et voire même plus performantes.

Ci-dessous est illustré un tableau comparatif de l'âme de deux structures sandwich de l'invention par rapport à celles d'autres structures sandwich. Ce tableau permet de mettre en évidence l'intérêt du crêpage des fibres après leur obtention par centrifugation interne.

Les exemples présentés 1 à 4 correspondent à des échantillons d'âme (épaisseur de 80 mm) de structures ou panneaux sandwich. Sont données la masse volumique de l'âme, sa résistance à la compression, sa résistance au cisaillement et sa conductivité thermique λ.

L'exemple 1 (ex1) correspond à une âme de panneau sandwich fabriqué selon l'invention à partir de matelas en fibres de verre obtenues donc par centrifugation interne et par crêpage tel qu'explicité ci-dessus, avec les caractéristiques préférentielles de crêpage (R=3,5 et H/e=1,6), la distribution des fibres présentant un profil en V.

L'exemple 1a (ex1 a) correspond à une âme de panneau sandwich fabriqué selon l'invention à partir de matelas en fibres de verre obtenues donc par centrifugation interne et par crêpage tel qu'explicité ci-dessus, avec des caractéristiques standard de crêpage (R=3 et H/e=1,2).

L'exemple 2 (ex2) correspond à une âme de panneau sandwich commercialisé par la société RANNILA et fabriqué à partir de matelas en fibres de verre obtenues par centrifugation interne et sans crêpage commercialisées par la société ISOVER OY.

Les exemples 3 et 4 (ex3 et ex4) correspondent à des âmes de panneaux sandwich fabriqués spécifiquement par la demanderesse pour l'objet de la demande afin d'effectuer des tests comparatifs avec les âmes des panneaux sandwich fabriqués selon l'invention. Il s'agit de panneaux fabriqués à partir de matelas en fibres de verre obtenues par centrifugation interne et sans crêpage. Ils sont donc dans leur fabrication similaires à l'exemple 2, seule la densité change.

Les mesures données pour ces exemples ont été faites sur des lamelles de l'âme d'un panneau sandwich avant assemblage de l'âme aux parements, ces lamelles étant positionnées telles qu'agencées dans la structure finale (tournées de 90° par rapport au plan de repos du matelas lors de la découpe des lamelles).

Les mesures de résistance à la compression ont été réalisées selon la norme EN826 sur des échantillons de 1 dm².

Les mesures de résistance au cisaillement ont été réalisées selon la norme EN12090 sur des échantillons de lamelles de 200 mm de longueur.

Les mesures de conductivité thermique ont été réalisées selon la norme EN3162 sur un échantillon de 600 mm par 600 mm, composé d'une pluralité de lamelles serrées les unes contre les autres.

Les exemples 5 et 6 correspondent à des âmes de panneaux sandwich fabriqués par la société PAROC OY sous la dénomination PAROC 50C (ex5) et respectivement PAROC 75C (ex6) selon deux densités respectives différentes pour l'âme. L'âme est fabriquée à partir de matelas fibreux de laine de roche obtenus par un procédé de centrifugation externe, et non pas interne comme pour l'invention, et par un procédé de crêpage.

La résistance à la compression, la résistance au cisaillement et la conductivité thermique de ces exemples sont données telles que décrites dans la publication "CERTIFICATE N°3/96 (date of issue:30.09.1996)" pour le produit "PAROC sandwich panels for external walls, partitions and ceilings" du fabricant "Paroc Oy Panel Systems - Finland".

| exemples | ex1 | ex1a | ex2 | ex3 | ex4 | ex5 | ex6 |
|---|---|---|---|---|---|---|---|
| Densité (kg/m³) | 65 | 65 | 80 | 70 | 65 | 85 | 115 |
| Résistance à la compression (kPa) | 110 | 90 | 80 | 65 | 60 | 60 | 105 |
| Résistance au cisaillement (kPa) | 80 | 55 | 110 | 80 | 80 | 54 | 81 |
| Conductivité thermique λ (mW/m.K) | 40,5 | 40,5 | 43 | 41,5 | 40,5 | 41 | 45 |

Ce tableau amène aux conclusions suivantes :
- Les âmes des structures fabriquées selon l'invention, obtenues donc à partir de laine minérale selon un procédé de centrifugation interne et de crêpage (exemples 1 et 1 a) ont une meilleure performance quant à la résistance à la compression, que les structures fabriquées à partir de laine minérale selon un procédé de centrifugation interne et sans crêpage (exemple 2 à 4). En outre, ces structures des exemples 1 et 1 a présentent l'avantage d'une plus faible densité. Enfin, pour une densité équivalente (exemple 1 et exemple 4), la résistance au cisaillement selon les caractéristiques de crêpage préférentielles reste aussi bonne avec le produit crêpé de l'invention qu'à partir d'un produit non crêpé tout en augmentant nettement la résistance à la compression.
- Les âmes des structures fabriquées selon l'invention obtenues à partir de laine minérale selon un procédé de centrifugation interne et de crêpage (en particulier l'exemple 1) ont une meilleure performance quant à la résistance à la compression et la résistance au cisaillement que les structures fabriquées à partir de laine minérale selon un procédé de centrifugation externe et avec crêpage et de densité plus importante (exemples 5 et 6).
- Les âmes des structures de l'invention sont ainsi avantageusement de plus faible densité que les âmes des structures pouvant notamment exister sur le marché (exemple 1 comparativement à l'exemple 6) pour des performances équivalentes quant à la résistance à la compression et la résistance au cisaillement, ce qui conduit en outre à des performances thermiques améliorées par la baisse de la conductivité thermique (de 45 mW/m.K pour l'exemple 6 à 40 mW/m.K pour l'exemple 1).

## Revendications

1. Structure sandwich (2) comportant une âme (20) et deux éléments de parement (21, 22) entre lesquels est disposée l'âme, l'âme (20) étant formée à partir d'un produit (1) à base de fibres minérales obtenu par un procédé de centrifugation interne associée à un étirage par un courant gazeux à haute température, **caractérisée en ce que** les fibres minérales sont crêpées et **en ce que** la distribution des fibres suivant une section sensiblement parallèle à la surface des éléments de parement (21, 22) est agencée selon un profil sensiblement en V.

2. Structure sandwich selon la revendication 1, **caractérisée en ce que** l'âme comprend une pluralité de lamelles (25) accolées qui s'étendent selon l'extension principale des éléments de parement, les lamelles étant constituées à partir du produit (1) à base de fibres minérales crêpées.

3. Structure selon la revendication 2, **caractérisée en ce que** le profil en V de la distribution des fibres s'étend sur toute la largeur des lamelles et les pointes des V sont sensiblement alignées.

4. Structure sandwich selon l'une quelconque des revendications précédentes, **caractérisée en ce que** sa densité est au plus égale à 80 kg/m³, de préférence comprise entre 50 et 70 kg/m³.

5. Structure sandwich selon l'une quelconque des revendications précédentes, **caractérisée en ce qu'**elle présente une résistance à la compression au moins égale à 60kPa.

6. Structure sandwich selon l'une quelconque des revendications précédentes, **caractérisée en ce qu'**elle présente une résistance au cisaillement au moins égale à 60kPa.

7. Structure sandwich selon l'une quelconque des revendications précédentes, **caractérisée en ce que** les fibres minérales sont obtenues à partir de la composition verrière suivante en proportions pondérales :
| | |
|---|---|
| SiO₂ | 57 à 70% |
| Al₂O₃ | 0 à 5% |
| CaO | 5 à 10% |
| MgO | 0 à 5% |
| Na₂O + K₂O | 13 à 18% |
| B₂O₃ | 2 à 12% |
| F | 0 à 1,5% |
| P₂O₅ | 0 à 4% |
| Impuretés | <2% |
et renferme plus de 0,1% en poids de pentoxyde de phosphore lorsque le pourcentage pondéral d'alumine est égal ou supérieur à 1%.

8. Structure sandwich selon l'une quelconque des revendications 1 à 7, **caractérisée en ce que** les fibres minérales sont obtenues à partir de la composition verrière suivante en mol% :
| | |
|---|---|
| SiO₂ | 55-70 |
| B₂O₃ | 0-5 |
| Al₂O₃ | 0-3 |
| TiO₂ | 0-6 |
| Oxydes de fer | 0-2 |
| MgO | 0-5 |
| CaO | 8-24 |
| Na₂O | 10-20 |
| K₂O | 0-5 |
| Fluorure | 0-2 |

9. Structure sandwich selon l'une quelconque des revendications 1 à 7, **caractérisée en ce que** les fibres minérales sont obtenues à partir de la composition verrière suivante en proportions pondérales, a teneur en alumine étant de préférence supérieure ou égale à 16% en poids,
| | |
|---|---|
| SiO₂ | 35-60 % |
| Al₂O₃ | 12-27 % |
| CaO | 0-35 % |
| MgO | 0-30 %, |
| Na₂O | 0-17 % |
| K₂O | 0-17 % |
| R₂O (Na₂O + K₂O) | 10-17 %, |
| P₂O₅ | 0-5 % |
| Fe₂O₃ | 0-20 % |
| B₂O₃ | 0-8 % |
| TiO₂ | 0-3 % |

10. Structure sandwich selon l'une quelconque des revendications précédentes, **caractérisée en ce que** les éléments de parement (21, 22) sont en tôle, éventuellement perforée.

11. Structure sandwich selon l'une quelconque des revendications précédentes utilisée en tant que panneau d'isolation thermique et/ou acoustique, de type panneau de toit, cloison ou parement de façade.

12. Procédé de fabrication d'une structure selon l'une quelconque des revendications 1 à 11, **caractérisé en ce qu'**il consiste à :
- délivrer sur un plan (P) le produit (1) à base de fibres minérales obtenues par un procédé de centrifugation interne;
- crêper le produit (1);
- découper le produit crêpé en lamelles (25), de préférence selon la plus grande extension du produit crêpé;
- tourner les lamelles (25) de 90° par rapport au plan (P);
- accoler les lamelles et les assembler entre les deux éléments de parement (21, 22).

13. Procédé selon la revendication 12, **caractérisé en ce que** les fibres du produit (1) sont crêpées au moyen d'une installation de crêpage (31) comportant au moins une première paire (310, 311) et une seconde paire (312, 313) de convoyeurs entre lesquels défile le produit pour être comprimé longitudinalement et selon son épaisseur, et qui présentent respectivement des vitesses V1 et V2, le rapport des vitesses R=V1/V2 étant supérieur ou égal à 3, et de préférence égal à 3,5, ainsi que des moyens de compression (315) réduisant le produit à son épaisseur finale e, le rapport H/e avec H correspondant à la hauteur entre les convoyeurs de la seconde paire (312, 313) étant supérieur ou égal à 1,2, et de préférence égale à 1,6.

14. Méthode de construction à partir d'au moins un élément isolant d'architecture, de type panneau de toit, cloison, parement de façade, **caractérisée en ce que** l'élément isolant d'architecture est formé par l'assemblage de structures sandwich selon l'une quelconque des revendications 1 à 11.

15. Méthode de construction selon la revendication 14, **caractérisée en ce que** les structures sandwich sont aboutées et associées entre elles par encastrement de leurs extrémités (23, 24) qui présentent des formes de coopération mutuelle.

## Patentansprüche

1. Sandwichelement (2) umfassend einen Kern (20) und zwei Verkleidungselemente (21, 22) zwischen denen der Kern angeordnet ist, wobei der Kern (20) aus einem Produkt (1) aus Mineralfasern hergestellt durch ein Verfahren der internen Zerfaserung und ein Ausziehen durch einen Heißgasstrom gebildet ist, **dadurch gekennzeichnet, dass** die Mineralfasern gestaucht sind und dass die Verteilung der Fasern nach einem etwa parallelen Abschnitt zu der Oberfläche der Verkleidungselemente (21, 22) in Form eines V-Profils angeordnet ist.

2. Sandwichelement nach Anspruch 1, **dadurch gekennzeichnet, dass** der Kern eine Mehrzahl von verbundenen Lamellen (25) aufweist, die sich in Richtung der der Haupterstreckung der Verkleidungselemente erstrecken, wobei die Lamellen aus dem Produkt (1) aus gestauchter Mineralwolle gebildet sind

3. Element nach Anspruch 2, **dadurch gekennzeichnet, dass** das V-Profil der Faserverteilung sich über die gesamte Länge der Lamellen erstreckt und die Spitzen des V im Wesentlichen ausgerichtet sind.

4. Sandwichelement nach einem der vorherigen Ansprüche, **dadurch gekennzeichnet, dass** seine Dichte höchstens 80 kg/m³, vorzugsweise zwischen 50 und 70 kg/m³ beträgt.

5. Sandwichelement nach einem der vorherigen Ansprüche, **dadurch gekennzeichnet, dass** sie eine Druckfestigkeit von mindestens 60 kPa aufweist.

6. Sandwichelement nach einem der vorherigen Ansprüche, **dadurch gekennzeichnet, dass** sie eine Scherfestigkeit von mindestens 60 kPa aufweist.

7. Sandwichelement nach einem der vorherigen Ansprüche, **dadurch gekennzeichnet, dass** die Mineralfasern aus nachfolgender Glaszusammensetzung in Gewichtsanteilen erhalten werden:
| | |
|---|---|
| SiO₂ | 57 bis 70 % |
| Al₂O₃ | 0 bis 5 % |
| CaO | 5 bis 10 % |
| MgO | 0 bis 5 % |
| Na₂O + K₂O | 13 bis 18 % |
| B₂O₃ | 2 bis 12 % |
| F | 0 bis 1,5 % |
| P₂O₅ | 0 bis 4 % |
| Verunreinigungen | |
und dabei mehr als 0,1 Gew.-% Phosphorpentoxid enthält, wenn der Gewichtsanteil des Aluminiumoxids gleich oder größer als 1 % ist.

8. Sandwichelement nach einem der Ansprüche 1 bis 7, **dadurch gekennzeichnet, dass** die Mineralfasern aus nachfolgender Glaszusammensetzung in Mol-% erhalten werden:
| | |
|---|---|
| SiO₂ | 55 - 70 |
| B₂O₃ | 0 - 5 |
| Al₂O₃ | 0 - 3 |
| TiO₂ | 0 - 6 |
| Eisenoxide | 0 - 2 |
| MgO | 0 - 5 |
| CaO | 8 - 24 |
| Na₂O | 10 - 20 |
| K₂O | 0 - 5 |
| Fluoride | 0 - 2 |

9. Sandwichelement nach einem der vorherigen Ansprüche, **dadurch gekennzeichnet, dass** die Mineralfasern aus nachfolgender Glaszusammensetzung in Gewichtsanteilen erhalten werden, wobei vorzugsweise der Aluminiumoxidgehalt größer als oder gleich 16 Gew.-% ist:
| | |
|---|---|
| SiO₂ | 35 - 60 % |
| Al₂O₃ | 12 - 27 % |
| CaO | 0 - 35 % |
| MgO | 0 - 30 % |
| Na₂O | 0 - 17 % |
| K₂O | 0 - 17 % |
| R2O (Na₂O + K₂O) | 10 - 17 % |
| P₂O₅ | 0 - 5 % |
| Fe₂O₃ | 0 - 20 % |
| B₂O₃ | 0 - 8 % |
| TiO₂ | 0 - 3 % |

10. Sandwichelement nach einem der vorherigen Ansprüche, **dadurch gekennzeichnet, dass** die Verkleidungselemente (21, 22) aus Blech und gegebenenfalls perforiert sind.

11. Sandwichelement nach einem der vorherigen Ansprüche verwendet als Dämmplatte zur Wärme- und/oder Schalldämmung, vom Typ Dachplatte, Trennwand oder Außenverkleidung einer Fassade.

12. Verfahren zur Herstellung eines Elements nach einem der Ansprüche 1 bis 11, **gekennzeichnet durch**
- Bereitstellen des Produkts (1) aus Mineralfasern hergestellt **durch** ein Verfahren der internen Zerfaserung auf einer Ebene (P);
- Stauchen des Produkts (1);
- Schneiden des gestauchten Produkts (1) in Lamellen (25), vorzugsweise in Richtung der größten Erstreckung des gestauchten Produkts;
- Drehen der Lamellen (25) um 90° in Bezug auf die Ebene (P);
- Verbinden der Lamellen und Einbringen des Verbunds zwischen die zwei Verkleidungselemente (21, 22).

13. Verfahren nach Anspruch 12, **dadurch gekennzeichnet, dass** die Fasern des Produkts (1) mittels einer Stauchvorrichtung (31) gestaucht werden, die wenigstens ein erstes Paar (310, 311) und ein zweites Paar (312, 313) von Förderbändern umfasst, zwischen denen das Produkt vorbeiläuft, um in Längsrichtung und in seiner Dicke gestaucht zu werden, und die eine Geschwindigkeit V1 bzw. V2 aufweisen, wobei das Geschwindigkeitsverhältnis R = V1/V2 größer oder gleich 3, vorzugsweise gleich 3,5 ist, sowie wie Mittel zur Kompression (315), zur Reduzierung der Produktdicke auf die Enddicke e, wobei das Verhältnis H/e größer oder gleich 1,2, vorzugsweise gleich 1,6 ist und H der Höhe zwischen den Förderbändern des zweiten Paars (312, 313) entspricht.

14. Baumethode ausgehend von wenigstens einem architektonischen Dämmelement vom Typ Dachplatte, Wand, Außenverkleidung einer Fassade, **dadurch gekennzeichnet, dass** das architektonische Dämmelement durch das Zusammenfügen von Sandwichelementen nach einem der Ansprüche 1 bis 11 gebildet ist.

15. Baumethode nach Anspruch 14, **dadurch gekennzeichnet, dass** die Sandwichelemente zusammengefügt und miteinander verbunden werden durch Einfalzungen ihrer Enden (23, 24), die miteinander wechselwirkende Formen aufweisen.

## Claims

1. A sandwich structure (2) comprising a core (20) and two facings (21, 22) between which the core is placed, the core (20) being formed from a mineral-fiber-based product (1) obtained by a process involving internal centrifugation combined with attenuation by a high-temperature gas stream, **characterized in that** the mineral fibers are crimped and **in that** the fiber distribution over a section approximately parallel to the surface of the facings (21, 22) has an approximately V-shaped profile.

2. The sandwich structure as claimed in claim 1, **characterized in that** the core comprises a plurality of juxtaposed lamellae (25) that extend along the main extension of the facings, the lamellae being formed from the product (1) based on crimped mineral fibers.

3. The structure as claimed in claim 2, **characterized in that** the V-shaped profile of the fiber distribution extends over the entire width of the lamellae and the tips of the Vs are approximately aligned.

4. The sandwich structure as claimed in any one of the preceding claims, **characterized in that** its density is at most equal to 80 kg/m³, preferably between 50 and 70 kg/m³.

5. The sandwich structure as claimed in any one of the preceding claims, **characterized in that** it has a compressive strength of at least 60 kPa.

6. The sandwich structure as claimed in any one of the preceding claims, **characterized in that** it has a shear strength of at least 60 kPa.

7. The sandwich structure as claimed in any one of the preceding claims, **characterized in that** the mineral fibers are obtained from the following glass composition in proportions by weight:
| | |
|---|---|
| SiO₂ | 57 to 70% |
| Al₂O₃ | 0 to 5% |
| CaO | 5 to 10% |
| MgO | 0 to 5% |
| Na₂O + K₂O | 13 to 18% |
| B₂O₃ | 2 to 12% |
| F | 0 to 1.5% |
| P₂O₅ | 0 to 4% |
| Impurities | < 2% |
and contain more than 0.1% by weight of phosphorus pentoxide when the weight percentage of alumina is equal to or greater than 1%.

8. The sandwich structure as claimed in any one of claims 1 to 7, **characterized in that** the mineral fibers are obtained from the following glass composition in mol% :
| | |
|---|---|
| SiO₂ | 55-70 |
| B₂O₃ | 0-5 |
| Al₂O₃ | 0-3 |
| TiO₂ | 0-6 |
| Iron oxides | 0-2 |
| MgO | 0-5 |
| CaO | 8-24 |
| Na₂O | 10-20 |
| K₂O | 0-5 |
| Fluoride | 0-2 |

9. The sandwich structure as claimed in any one of claims 1 to 7, **characterized in that** the mineral fibers are obtained from the following glass composition in percentages by weight, the alumina content preferably being greater than or equal to 16% by weight:
| | |
|---|---|
| SiO₂ | 35-60% |
| Al₂O₃ | 12-27% |
| CaO | 0-35 % |
| MgO | 0-30 % |
| Na₂O | 0-17 % |
| K₂O | 0-17 % |
| R₂O (Na₂O + K₂O) | 10-17% |
| P₂O₅ | 0-5 % |
| Fe₂O₃ | 0-20 % |
| B₂O₃ | 0-8 % |
| TiO₂ | 0-3% |

10. The sandwich structure as claimed in any one of the preceding claims, **characterized in that** the facings (21, 22) are made of sheet metal, possibly perforated.

11. The sandwich structure as claimed in any one of the preceding claims, used as a thermal and/or acoustic insulation panel, of the roof, partition or wall-cladding panel type.

12. A process for manufacturing a structure as claimed in any one of the claims 1 to 11, **characterized in that** it consists in:
delivering, on a plane (P), the product (1) based on mineral fibers obtained by an internal centrifugation process;
crimping the product (1);
cutting the crimped product into lamellae (25), preferably along the greatest extent of the crimped product;
turning the lamellae (25) through 90° with respect to the plane (P); and
juxtaposing the lamella and assembling them between the two facings (21, 22).

13. The process as claimed in claim 12, **characterized in that** the fibers of the product (1) are crimped by means of a crimping unit (31) comprising at least a first pair (310, 311) and a second pair (312, 313) of conveyors between which the product runs in order to be compressed both longitudinally and in its thickness, which conveyors have speeds V1 and V2 respectively, the ratio of the speeds R = V1/V2 being greater than or equal to 3, and preferably equal to 3.5, and also compression means (315) that reduce the product to its final thickness e, the H/e ratio being greater than or equal to 1.2, and preferably equal to 1.6, H corresponding to the height between the conveyors of the second pair (312, 313).

14. A method of construction using at least one architectural insulation element, of the roof, partition or wall-cladding panel type, **characterized in that** the architectural insulation element is formed by assembling sandwich structures as claimed in any one of claims 1 to 11.

15. The method of construction as claimed in claim 14, **characterized in that** the sandwich structures are butted and joined together by interlocking of their ends (23, 24), which have mutually cooperating shapes.
